# EUROPEAN PATENT APPLICATION

(11) **EP 4 332 512 A1**
(43) Date of publication of application: **06.03.2024**
(21) Application number: 22795565.5
(22) Date of filing: 11.04.2022
(51) Int. Cl.: G01D 5/245, H01F 5/00

(54) **POWER-GENERATING ELEMENT, ENCODER, AND METHOD FOR PRODUCING MAGNETIC MEMBER**

(30) Priority: 26.04.2021 JP 2021073976
(71) Applicant: Panasonic Intellectual Property Management Co., Ltd., Kadoma-shi, Osaka 571-0057 (JP)
(72) Inventor: ITO, Shinichiro, Osaka 571-0057 (JP); TANAKA, Masaki, Osaka 571-0057 (JP); WATANABE, Akihiko, Osaka 571-0057 (JP); KUSUKAME, Koichi, Osaka 571-0057 (JP); NUKADA, Keiichiro, Osaka 571-0057 (JP); NISHITANI, Yu, Osaka 571-0057 (JP); KANEKO, Yukihiro, Osaka 571-0057 (JP)
(74) Representative: SSM Sandmair
(86) International application number: PCT/JP2022/017527
(87) International publication number: WO 2022/230651

(57) **Abstract**

Provided are a power generation element, an encoder, and a method of manufacturing a magnetic member capable of increasing generated power. Power generation element (100) includes magnetic member (110) that produces a large Barkhausen effect, coil (130) wound around magnetic member (110), and ferrite member (150) provided at an end of magnetic member (110) to be aligned with coil (130) along a winding axis direction of coil (130). Ferrite member (150) includes main body (151) located inside columnar space (A) and protrusion (152) connected to main body (151) and located outside columnar space (A). Columnar space (A) is surrounded by a virtual plane when it is assumed that an outer edge of coil (130) when viewed from the winding axis direction of coil (130) is extended to both sides in the winding axis direction of coil (130), and is sandwiched between two virtual planes that are in contact with both ends of magnetic member (110) in the winding axis direction of coil (130) and are orthogonal to the winding axis direction.

## Description

### TECHNICAL FIELD

The present disclosure relates to a power generation element, an encoder, and a method of manufacturing a magnetic member, and particularly relates to a power generation element, an encoder, and a method of manufacturing a magnetic member using the large Barkhausen effect.

### BACKGROUND ART

Conventionally, in an encoder for detecting rotation or the like of a motor, there is known an encoder that uses a power generation element utilizing the large Barkhausen effect in order to detect rotation without using a battery (for example, PTL 1). Such a power generation element has, for example, a configuration in which a coil is wound around a magnetic member that produces the large Barkhausen effect. In a magnetic member that produces the large Barkhausen effect, a magnetic flux density rapidly changes due to a change in an external magnetic field, and thus electric power is generated in the coil wound around the magnetic member due to the rapid change in the magnetic flux density. The encoder detects rotation or the like of the motor by using an electric signal generated by such electric power.

### Citation List

### Patent Literature

PTL 1: Unexamined Japanese Patent Publication No. 2012-198067

### SUMMARY OF THE INVENTION

In the encoder described above, the operation may become unstable because the electric power generated by the power generation element is small.

The present disclosure has been made to solve such a problem, and an object of the present disclosure is to provide a power generation element, an encoder, and a method of manufacturing a magnetic member capable of increasing generated power.

In order to achieve the above object, a power generation element according to an aspect of the present disclosure includes: a magnetic member that produces a large Barkhausen effect by a change in an external magnetic field formed by a magnetic field generation source; a coil wound around the magnetic member; and a ferrite member provided at an end of the magnetic member, the ferrite member being aligned with the coil. The ferrite member includes a main body and a protrusion protruding from the main body. The main body is located inside a columnar space, the columnar space being surrounded by a virtual plane when it is assumed that an outer edge of the coil when viewed from a winding axis direction of the coil is extended to both sides in the winding axis direction of the coil, and sandwiched between two virtual planes that are in contact with both ends of the magnetic member in the winding axis direction of the coil and are orthogonal to the winding axis direction of the coil. The protrusion is connected to the main body and is located outside the columnar space.

Furthermore, a power generation element according to another aspect of the present disclosure includes: a magnetic member that produces a large Barkhausen effect by a change in an external magnetic field formed by a magnetic field generation source; a ferrite member enclosing the magnetic member, the ferrite member having a tubular shape; and a coil wound around the ferrite member.

Furthermore, a power generation element according to another aspect of the present disclosure includes: a magnetic member that produces a large Barkhausen effect by a change in an external magnetic field formed by a magnetic field generation source; a coil wound around the magnetic member; and a ferrite member provided at an end of the magnetic member, the ferrite member being aligned with the coil along a winding axis direction of the coil. The ferrite member is a resin molded body containing at least one of a soft magnetic powder and a hard magnetic powder, and a resin.

Furthermore, a power generation element according to another aspect of the present disclosure includes: a magnetic member that produces a large Barkhausen effect by a change in an external magnetic field formed by a magnetic field generation source; and a coil wound around the magnetic member. The coil includes an end that has an outer peripheral diameter smaller than an outer peripheral diameter of a central part of the coil in a winding axis direction of the coil.

Furthermore, a power generation element according to another aspect of the present disclosure includes: a magnetic member that produces a large Barkhausen effect by a change in an external magnetic field formed by a magnetic field generation source; a first coil wound around the magnetic member; and a second coil disposed on a side opposite to a side of the magnetic field generation source of the first coil, the second coil facing the first coil and wound along an axis parallel to a winding axis of the first coil.

Furthermore, a power generation element according to another aspect of the present disclosure includes: a magnetic member that generates a large Barkhausen effect by a change in an external magnetic field formed by a magnetic field generation source, the magnetic member having a plate shape; and a coil wound around the magnetic member. The magnetic member includes a plurality of first magnetic sensitive layers and a plurality of second magnetic sensitive layers having harder magnetism than the plurality of first magnetic sensitive layers, the plurality of first magnetic sensitive layers and the plurality of second magnetic sensitive layers are alternately stacked along a direction intersecting a winding axis direction of the coil, and the plurality of first magnetic sensitive layers has a total thickness larger than a total thickness of the plurality of second magnetic sensitive layers.

Furthermore, a power generation element according to another aspect of the present disclosure includes: a magnetic member that produces a large Barkhausen effect by a change in an external magnetic field formed by a magnetic field generation source; and a coil wound around the magnetic member. The magnetic member includes a composite magnetic wire having different magnetic characteristics between a central part and an outer peripheral part, and a covering layer covering an outer periphery of the composite magnetic wire and configured of a soft magnetic material.

Furthermore, an encoder according to another aspect of the present disclosure includes: a magnet that rotates together with a rotating shaft; and the power generation element according to any one of the above aspects that generates an electric signal by a change in a magnetic field formed by the magnet due to rotation of the magnet.

Furthermore, a method of manufacturing a magnetic member according to another aspect of the present disclosure is a method of manufacturing a magnetic member that is used in a power generation element and produces a large Barkhausen effect, the method including: preparing a magnetic body having a tubular shape; and injecting, into the magnetic body, a magnetic material having magnetic characteristics different from those of the magnetic body.

Furthermore, a method of manufacturing a magnetic member according to another aspect of the present disclosure is a method of manufacturing a magnetic member that is used in a power generation element and produces a large Barkhausen effect, the method including: preparing a magnetic body having a wire shape; and covering a surface of the magnetic body with a magnetic material having magnetic characteristics different from those of the magnetic body.

According to the present disclosure, power generated by the power generation element can be increased.

### BRIEF DESCRIPTION OF THE DRAWINGS

Fig. 1 is a cross-sectional view illustrating a schematic configuration of an encoder according to a first exemplary embodiment.
Fig. 2 is a top view of a magnet in the encoder according to the first exemplary embodiment.
Fig. 3 is a cross-sectional view illustrating a schematic configuration of a power generation element according to the first exemplary embodiment.
Fig. 4 is a diagram illustrating an example of a schematic BH curve of a magnetic member that produces the large Barkhausen effect.
Fig. 5 is a cross-sectional view illustrating a schematic configuration of a power generation element according to a first modification of the first exemplary embodiment.
Fig. 6 is a cross-sectional view illustrating a schematic configuration of a power generation element according to a second modification of the first exemplary embodiment.
Fig. 7 is a cross-sectional view illustrating a schematic configuration of a power generation element according to a third modification of the first exemplary embodiment.
Fig. 8 is a cross-sectional view illustrating a schematic configuration of a power generation element according to a fourth modification of the first exemplary embodiment.
Fig. 9 is a cross-sectional view illustrating a schematic configuration of a power generation element according to a fifth modification of the first exemplary embodiment.
Fig. 10 is a cross-sectional view illustrating a schematic configuration of a power generation element according to a sixth modification of the first exemplary embodiment.
Fig. 11 is a cross-sectional view illustrating a schematic configuration of a power generation element according to a seventh modification of the first exemplary embodiment.
Fig. 12 is a cross-sectional view illustrating a schematic configuration of a power generation element according to a second exemplary embodiment.
Fig. 13 is a cross-sectional view illustrating a schematic configuration of a power generation element according to a first modification of the second exemplary embodiment.
Fig. 14 is a cross-sectional view illustrating a schematic configuration of a power generation element according to a third exemplary embodiment.
Fig. 15 is a cross-sectional view illustrating a schematic configuration of a power generation element according to a fourth exemplary embodiment.
Fig. 16 is a cross-sectional view illustrating a schematic configuration of a power generation element according to a fifth exemplary embodiment.
Fig. 17 is a cross-sectional view and a top view illustrating a schematic configuration of a magnetic member according to a sixth exemplary embodiment.
Fig. 18 is a cross-sectional view and a top view illustrating a schematic configuration of a magnetic member according to a first modification of the sixth exemplary embodiment.
Fig. 19 is a cross-sectional view and a top view illustrating a schematic configuration of a magnetic member according to a second modification of the sixth exemplary embodiment.
Fig. 20 is a cross-sectional view illustrating a schematic configuration of a power generation element according to a seventh exemplary embodiment.
Fig. 21 is a flowchart of a first example of a method of manufacturing the magnetic member according to the seventh exemplary embodiment.
Fig. 22 is a flowchart of a second example of a method of manufacturing the magnetic member according to the seventh exemplary embodiment.

### DESCRIPTION OF EMBODIMENT

Hereinafter, exemplary embodiments of the present disclosure will be described with reference to the drawings. Note that, each of the exemplary embodiments described below illustrates one specific example of the present disclosure. Therefore, numerical values, shapes, materials, constituent elements, arrangement positions and connection forms of the constituent elements, and the like shown in the following exemplary embodiments are illustrative and are not intended to limit the present disclosure. Therefore, among the constituent elements in the following exemplary embodiments, constituent elements not recited in the independent claims of the present disclosure are described as optional constituent elements.

Note that each of the drawings is a schematic diagram and not necessarily illustrated exactly. Thus, scales and the like are not necessarily matched in the respective drawings. Furthermore, in each drawing, substantially the same constituents are denoted with the same reference marks, and redundant descriptions are omitted or simplified.

Furthermore, in the present specification, a term indicating a relationship between elements such as parallel, a term indicating a shape of an element such as a rectangle, and a numerical range are not expressions representing only a strict meaning, but are expressions meaning to include a substantially equivalent range, for example, a difference of about several %.

### (First exemplary embodiment)

Encoder 1 and power generation element 100 according to a first exemplary embodiment will be described.

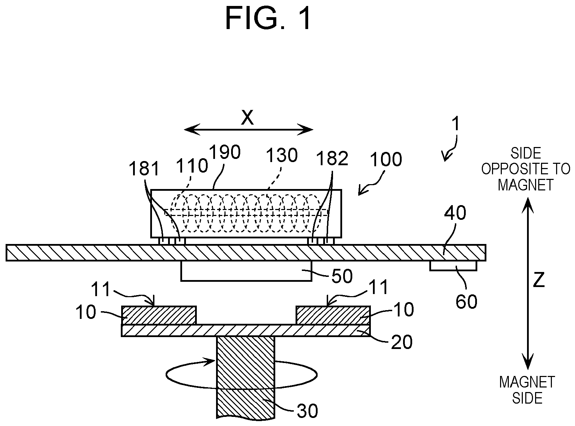

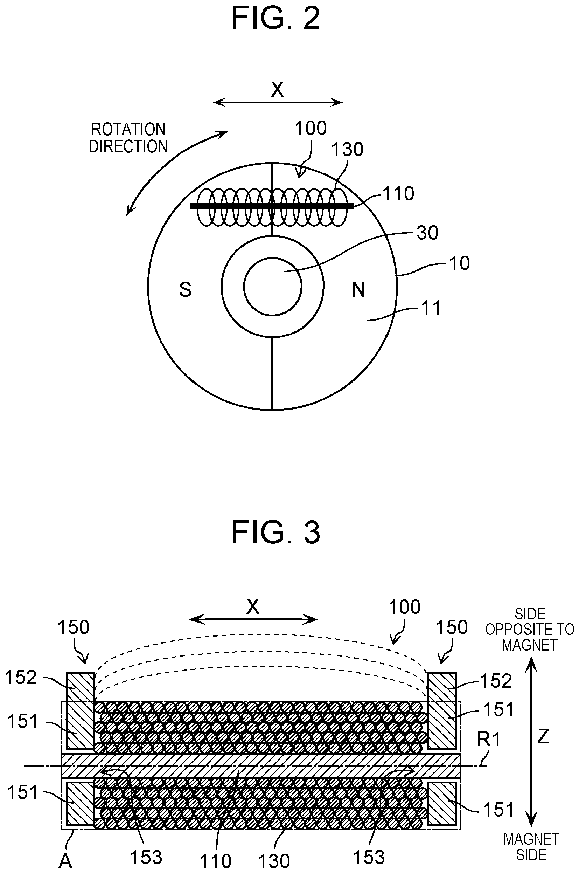

Fig. 1 is a cross-sectional view illustrating a schematic configuration of encoder 1 according to the present exemplary embodiment. Fig. 2 is a top view of magnet 10 in encoder 1 according to the present exemplary embodiment. Note that, in Fig. 1, magnetic member 110 and coil 130 accommodated in housing 190 of power generation element 100 are schematically illustrated by broken lines. Furthermore, in Fig. 2, illustration of components other than magnet 10, rotating shaft 30, and magnetic member 110 and coil 130 in power generation element 100 is omitted for ease of viewing.

Encoder 1 illustrated in Fig. 1 is, for example, a rotary encoder used in combination with a motor such as a servomotor. Furthermore, encoder 1 is, for example, an absolute encoder of a power generation system. Encoder 1 detects, for example, a rotation angle, a rotation amount, a rotation speed, and the like of rotating shaft 30 of a motor and the like on the basis of an electric signal generated by power generation element 100. Encoder 1 includes magnet 10, rotating plate 20, board 40, control circuit 50, memory 60, and power generation element 100. In encoder 1, power generation element 100 generates an electric signal by a change in a magnetic field formed by magnet 10 due to the rotation of magnet 10.

Rotating plate 20 is a plate-shaped member that rotates together with rotating shaft 30 of a motor or the like. A central part of one principal surface of rotating plate 20 is attached to an end of rotating shaft 30 in an axial direction of rotating shaft 30 (a direction in which rotating shaft 30 extends). Rotating plate 20 extends in a direction orthogonal to the axial direction of rotating shaft 30. Rotating plate 20 rotates about rotating shaft 30. A rotating operation of rotating shaft 30 is synchronized with a rotating operation of a rotating device. A shape of rotating plate 20 in plan view is, for example, a circular shape. Rotating plate 20 is made of metal, resin, glass, ceramic, or the like, for example.

Magnet 10 is a magnetic field generation source that forms an external magnetic field with respect to power generation element 100. Magnet 10 is, for example, a plate-shaped magnet. Magnet 10 faces rotating plate 20 and is located on the principal surface of rotating plate 20 on a side opposite to a side of rotating shaft 30. A thickness direction of rotating plate 20 and a thickness direction of magnet 10 are the same, and are an axial direction of rotating shaft 30. Magnet 10 rotates about rotating shaft 30 together with rotating plate 20. A rotation direction of magnet 10 is, for example, both clockwise and counterclockwise, but may be only one of clockwise and counterclockwise. A plan view shape of magnet 10 is a circular shape with an opening at a center, but may be another shape such as a rectangle. Furthermore, magnet 10 may not be opened. Furthermore, magnet 10 may be a magnet of another shape such as a rod-shaped magnet as long as a magnetic field applied to power generation element 100 can be changed.

Magnet 10 has a plurality of pairs of magnetic poles magnetized in the thickness direction, and the plurality of pairs of magnetic poles are arranged in the rotation direction of magnet 10. In Fig. 2, a magnetic pole on a side of principal surface 11, which is a surface of magnet 10 on a side of power generation element 100, is illustrated. Each pair of magnetic poles is magnetized such that an N pole and an S pole are reversed with respect to a pair of magnetic poles adjacent in the rotation direction of magnet 10.

In magnet 10, a plurality of magnetic poles are arranged in the rotation direction on principal surface 11 of magnet 10 on the side of power generation element 100. The plurality of magnetic poles includes at least one N pole and at least one S pole, and the N pole and the S pole are alternately arranged along the rotation direction. In the plurality of magnetic poles of magnet 10, the number of N poles is the same as the number of S poles.

The plurality of magnetic poles are arranged such that the N pole and the S pole face each other across rotating shaft 30. That is, the N pole of the plurality of magnetic poles faces the S pole with rotating shaft 30 interposed therebetween, and the S pole of the plurality of magnetic poles faces the N pole with rotating shaft 30 interposed therebetween. In the plurality of magnetic poles, the S pole is located at a position shifted by 180 degrees from the N pole and the N pole is located at a position shifted by 180 degrees from the S pole in the rotation direction of magnet 10. When viewed from the axial direction of rotating shaft 30, the sizes of the respective magnetic poles of the plurality of magnetic poles are equal. The rotation of magnet 10 changes a magnetic field applied to power generation element 100. In the example illustrated in Fig. 2, the plurality of magnetic poles is two, and includes one N pole and one S pole. Therefore, when magnet 10 makes one rotation together with rotating shaft 30, a direction of the magnetic field applied to power generation element 100 is reversed twice (one reciprocation). The number of the plurality of magnetic poles is not particularly limited, and may be four or six or more. When magnet 10 makes one rotation, the direction of the magnetic field applied to power generation element 100 is reversed by the number of magnetic poles.

Board 40 is positioned on a side of magnet 10 of rotating plate 20 so as to face rotating plate 20 and magnet 10 with a space therebetween. That is, rotating shaft 30, rotating plate 20, magnet 10, and board 40 are aligned in this order along the axial direction of rotating shaft 30. Board 40 does not rotate together with magnet 10 and rotating plate 20. Board 40 has a plate shape whose thickness direction is the axial direction of rotating shaft 30. A plan view shape of board 40 is, for example, a circular shape. For example, when viewed from the axial direction of rotating shaft 30, centers of rotating shaft 30, rotating plate 20, magnet 10, and board 40 coincide with each other.

Board 40 is, for example, a wiring board on which electronic components such as power generation element 100, control circuit 50, and memory 60 are mounted. In the example illustrated in Fig. 1, control circuit 50 and memory 60 are mounted on the principal surface of board 40 on a side of magnet 10, and power generation element 100 is mounted on the principal surface of the board 40 on a side opposite to magnet 10. Board 40 is fixed to, for example, a case (not illustrated) constituting a part of encoder 1, the motor, or the like.

Power generation element 100 is located on the principal surface of board 40 on the side opposite to the side of magnet 10. Therefore, a side of board 40 of power generation element 100 is the side of magnet 10. Power generation element 100 is aligned with magnet 10 and rotating plate 20 along the axial direction of rotating shaft 30. Hereinafter, a direction indicated by arrow Z in which magnet 10, rotating plate 20, and power generation element 100 are aligned may be referred to as an "alignment direction". The alignment direction is also a normal direction of principal surface 11 of magnet 10. Power generation element 100 does not rotate together with magnet 10 and rotating plate 20. Power generation element 100 is provided such that at least a part thereof faces magnet 10 and rotating plate 20 in the axial direction of rotating shaft 30. Furthermore, power generation element 100 extends along the principal surface of board 40 so as to extend in a direction intersecting (specifically, orthogonal to) a radial direction of magnet 10. Power generation element 100 generates power by a change in the magnetic field formed by magnet 10 due to the rotation of magnet 10, and generates an electric signal. A winding axis direction of coil 130 of power generation element 100 (a longitudinal direction of magnetic member 110) is a direction in which power generation element 100 extends. The winding axis direction of coil 130 is a direction indicated by arrow X in the drawing. Hereinafter, the winding axis direction of coil 130 indicated by arrow X in the drawing may be simply referred to as a "winding axis direction".

Power generation element 100 includes, for example, magnetic member 110, coil 130, ferrite member 150 (not illustrated in Figs. 1 and 2) illustrated in the cross-sectional view of Fig. 3, terminals 181, 182, and housing 190.

Details of magnetic member 110, coil 130, and ferrite member 150 will be described later. Magnetic member 110 is a magnetic member that produces the large Barkhausen effect, and a power generation pulse is generated in coil 130 wound around magnetic member 110. Note that an arrangement of power generation element 100 is not particularly limited as long as power generation element 100 is located in an area to which a magnetic field generated by magnet 10 is applied and is arranged to generate a power generation pulse by a change in the magnetic field due to the rotation of rotating shaft 30.

Terminals 181, 182 are members for electrically connecting power generation element 100 and board 40. Terminals 181, 182 are located at ends of power generation element 100 on the side of board 40. Magnet 10 is disposed on a side of terminals 181, 182 of power generation element 100. Terminal 181 is electrically connected to one end of a conductive wire constituting coil 130, and terminal 182 is electrically connected to the other end of the conductive wire. That is, coil 130 and board 40 are electrically connected via terminals 181, 182.

Housing 190 accommodates and supports magnetic member 110, coil 130, and ferrite member 150. Furthermore, housing 190 accommodates a part of terminals 181, 182. Housing 190 is opened to the side of magnet 10 of power generation element 100, for example. Housing 190 is fixed to board 40 by, for example, a fixing member (not illustrated) or the like.

Control circuit 50 is located on the principal surface of board 40 on the side of magnet 10. Control circuit 50 is electrically connected to power generation element 100. Control circuit 50 acquires an electric signal such as a power generation pulse generated by power generation element 100, and detects (calculates) a rotation angle, a rotation amount, a rotation speed, and the like of rotating shaft 30 of a motor and the like based on the acquired electric signal. Control circuit 50 is, for example, an integrated circuit (IC) package or the like.

Memory 60 is located on the principal surface of board 40 on the side of magnet 10. Memory 60 is connected to control circuit 50. Memory 60 is a nonvolatile memory such as a semiconductor memory that stores a result detected by control circuit 50.

Next, details of power generation element 100 according to the present exemplary embodiment will be described.

Fig. 3 is a cross-sectional view illustrating a schematic configuration of power generation element 100 according to the present exemplary embodiment. Fig. 3 illustrates a cross section taken along the alignment direction so as to pass through winding axis R1 of coil 130. Note that illustration of terminal 181, terminal 182, and housing 190 is omitted in Fig. 3 for ease of viewing. The same applies to the drawings of the power generation elements described below.

As illustrated in Fig. 3, power generation element 100 includes magnetic member 110, coil 130, and ferrite member 150.

Magnetic member 110 is a magnetic member that produces the large Barkhausen effect by a change in an external magnetic field formed by magnet 10 and the like. Magnetic member 110 is, for example, a composite magnetic wire having different magnetic characteristics between a central part and an outer peripheral part in a radial direction, such as a Wiegand wire. In the composite magnetic wire, one of the central part and the outer peripheral part is a hard magnetic part, and the other is a soft magnetic part. In the present exemplary embodiment, for example, in the composite magnetic wire, the central part is a hard magnetic part having a high coercive force, and the outer peripheral part is a soft magnetic part having a coercive force lower than that of the central part. The soft magnetic part covers the hard magnetic part from the outside in the radial direction.

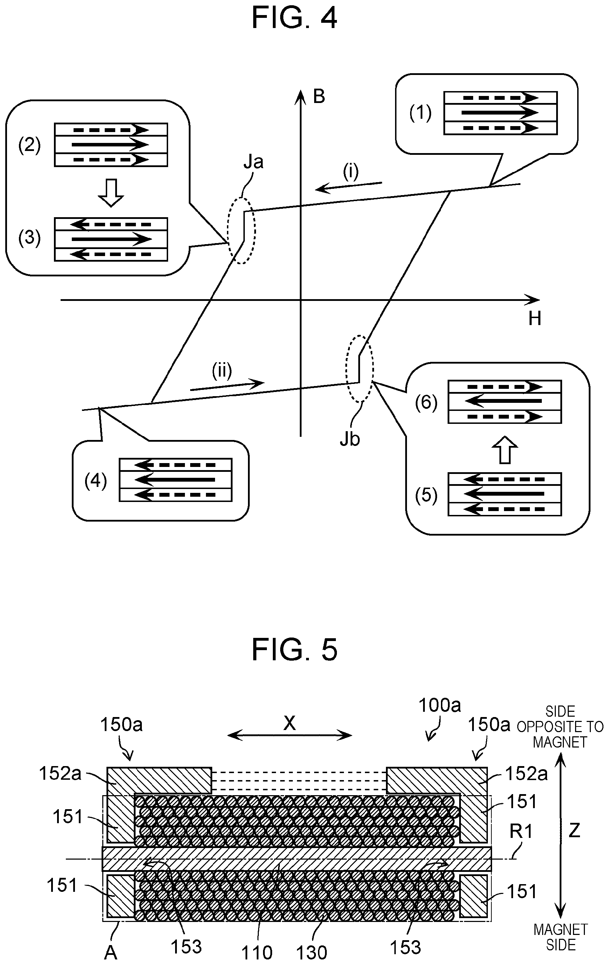

Here, the large Barkhausen effect will be described. Fig. 4 is a diagram illustrating an example of a schematic BH curve of magnetic member 110 that produces the large Barkhausen effect. Fig. 4 illustrates an example in which a composite magnetic wire in which the outer peripheral part is softer magnetic than the central part is used as magnetic member 110. Furthermore, Fig. 4 is a diagram in a case where a direction of the applied magnetic field changes in a longitudinal direction of the wire. Furthermore, (1) to (6) of Fig. 4 schematically illustrate magnetic member 110 in which a direction of magnetization is indicated by an arrow. A broken line arrow indicates the magnetization direction of the outer peripheral part that is soft magnetic, and a solid line arrow indicates the magnetization direction of the central part that is hard magnetic. Note that, in Fig. 4, the arrow indicating the direction of magnetization indicates only the direction of magnetization, and the direction of magnetization is indicated by an arrow having the same magnitude regardless of the magnitude of magnetization.

When a magnetic field having a certain strength or more is applied to magnetic member 110 along the longitudinal direction of magnetic member 110, the central part and the outer peripheral part of magnetic member 110 are magnetized in the same direction as illustrated in (1) of Fig. 4. Even if the direction of the magnetic field changes as in (i) of Fig. 4, the magnetization direction of the soft magnetic outer peripheral part does not change due to the influence of the hard magnetic center part until the magnetic field changes to some extent. As illustrated in (2) and (3) of Fig. 4, the magnetization direction of the soft magnetic outer peripheral part is reversed at once at a part surrounded by broken line Ja where the change in the magnetic field exceeds a threshold value. This phenomenon is also called a large Barkhausen jump. As a result, a magnetic flux density of magnetic member 110 rapidly changes, and electric power (power generation pulse) is generated in coil 130 wound around the magnetic member. When the magnetic field is further changed, as illustrated in (4) of Fig. 4, the magnetization direction of the central part is also reversed, and magnetic member 110 is magnetized in a direction opposite to (1) of Fig. 4. Also in this case, the direction of the magnetic field is changed as in (ii) of Fig. 4, and the magnetization direction of the outer peripheral part is reversed at once at a part surrounded by broken line Jb in which the change of the magnetic field exceeds a threshold value as illustrated in (5) and (6) of Fig. 4. As a result, the magnetic flux density of magnetic member 110 rapidly changes, and electric power (power generation pulse) is generated again in coil 130 wound around magnetic member 110. Such behavior also occurs in a composite magnetic wire in which the outer peripheral part is hard magnetic and the central part is soft magnetic.

As described above, a magnetic member exhibiting the behavior as illustrated in Fig. 4 is used for magnetic member 110. Note that magnetic member 110 is not limited to the composite magnetic wire, and may be any magnetic member that produces the large Barkhausen effect by having a hard magnetic part and a soft magnetic part having different magnetic characteristics. In magnetic member 110, for example, the hard magnetic part and the soft magnetic part are arranged in a direction intersecting (for example, orthogonal to) the winding axis direction, and the hard magnetic part and the soft magnetic part exist so as to extend in the winding axis direction, so that the large Barkhausen effect is generated. Magnetic member 110 may be, for example, a magnetic member having a structure in which thin films having different magnetic characteristics are stacked.

Referring again to Fig. 3, magnetic member 110 is, for example, an elongated member in which the winding axis direction of coil 130 is the longitudinal direction. A cross-sectional shape of magnetic member 110 cut in the radial direction is, for example, a circular shape or an elliptical shape, but may be another shape such as a rectangular shape or a polygonal shape. In the winding axis direction, a length of magnetic member 110 is longer than a length of coil 130, for example.

Coil 130 is a coil in which a conductive wire constituting coil 130 is wound around magnetic member 110. Specifically, coil 130 passes through a center of magnetic member 110 and is wound along winding axis R1 extending in the longitudinal direction of magnetic member 110. Furthermore, coil 130 is located between two ferrite members 150.

Ferrite member 150 is provided at the end of magnetic member 110 so as to be aligned with coil 130 along the winding axis direction of coil 130. In the present exemplary embodiment, two ferrite members 150 are provided at both ends of magnetic member 110, respectively. Two ferrite members 150 face each other with coil 130 interposed therebetween and have a symmetrical shape. Hereinafter, one of two ferrite members 150 will be mainly described, but the same description is applied to the other.

Ferrite member 150 is a plate-shaped member in which opening 153 is formed, and is, for example, ferrite beads made of a soft magnetic material. Ferrite member 150 is provided for magnetism collection of magnetic flux from magnet 10, stabilization of magnetic flux in magnetic member 110, and the like. Ferrite member 150 is, for example, softer magnetic than the soft magnetic part of magnetic member 110, that is, has a lower coercive force. The end of magnetic member 110 is located in opening 153. Opening 153 is a through hole penetrating ferrite member 150 along the winding axis direction.

Ferrite member 150 includes main body 151 and protrusion 152.

Main body 151 is disposed inside columnar space A. Columnar space A is a space surrounded by a virtual plane when it is assumed that an outer edge of coil 130 when viewed from the winding axis direction of coil 130 is extended to both sides in the winding axis direction, and sandwiched between two virtual planes that are in contact with both ends of magnetic member 110 in the winding axis direction and are orthogonal to the winding axis direction. In other words, in the space inside the outer edge of coil 130 when viewed from the winding axis direction of coil 130, columnar space A is a space that is in contact with both ends of magnetic member 110 in the winding axis direction and is sandwiched between two virtual planes orthogonal to the winding axis direction. Furthermore, columnar space A has a rectangular cross section cut along winding axis R1, and is a columnar space circumscribing magnetic member 110 and coil 130. Opening 153 is provided, for example, at a central part of main body 151 when viewed from the winding axis direction.

Protrusion 152 is connected to main body 151. Protrusion 152 is located outside columnar space A. Protrusion 152 is an example of a first protrusion located outside coil 130 in a direction orthogonal to the winding axis direction. Furthermore, protrusion 152 is located on the side opposite to the side of magnet 10 of coil 130.

In Fig. 3, an example of a magnetic flux line derived from magnetic member 110 in a case where magnetic member 110 is magnetized by an external magnetic field (for example, a magnetic field formed by magnet 10) is indicated by broken lines. In a case where ferrite member 150 is provided at the end of magnetic member 110, the magnetic flux passing through the outside of magnetic member 110 exits from ferrite member 150 from one end side toward the other end side of magnetic member 110. Such a magnetic flux that is formed on the outer side of magnetic member 110 from one end side to the other end side of magnetic member 110 and surrounds the outer side of magnetic member 110 derived from magnetic member 110 is a magnetic flux in a direction opposite to the inside of magnetic member 110. Therefore, when the magnetic flux derived from magnetic member 110 formed outside magnetic member 110 passes through coil 130, an electromotive force in a direction opposite to an electromotive force due to a change in the magnetic flux inside magnetic member 110 is simultaneously generated in coil 130. Since ferrite member 150 includes protrusion 152, a part of the magnetic flux exits from protrusion 152 as illustrated in Fig. 3. Since protrusion 152 located outside columnar space A protrudes so as to be separated from coil 130, the magnetic flux exiting from protrusion 152 hardly passes through coil 130. Therefore, by providing ferrite member 150 including protrusion 152, the magnetic flux in the direction opposite to the inside of magnetic member 110 passing through coil 130 can be reduced. Therefore, electric power generated in coil 130 increases, and the generated power of power generation element 100 can be increased.

Ferrite member 150 is, for example, a resin molded body containing at least one of a soft magnetic powder and a hard magnetic powder, and a resin. Since ferrite member 150 is a resin molded body, ferrite member 150 having a shape having protrusion 152 can be easily formed. Furthermore, such a resin molded body can easily form a ferrite member having various shapes to be described later, and the degree of freedom in the shape of the ferrite member is easily increased as compared with a case where the ferrite member is formed by conventional cutting or the like.

Examples of a material of the soft magnetic powder include an atomized powder and a ferrite powder. Furthermore, examples of a material of the hard magnetic powder include powders such as ferrite, neodymium-based magnets, Sm-Fe-N, and bicaloy. Examples of the resin include a nylon-based resin, a polyamide-based resin, and a polyphenylene sulfide-based resin.

A saturation magnetic flux density of ferrite member 150 is larger than a saturation magnetic flux density of magnetic member 110, for example. Furthermore, the maximum residual magnetic flux density of ferrite member 150 is larger than the maximum residual magnetic flux density of magnetic member 110. As a result, the effect of magnetism collection by ferrite member 150 can be enhanced.

Note that ferrite member 150 may not contain resin.

### [First modification]

Next, a first modification of the first exemplary embodiment will be described. In the following description of the present modification, differences from the first exemplary embodiment will be mainly described, and description of common points will be omitted or simplified.

Fig. 5 is a cross-sectional view illustrating a schematic configuration of power generation element 100a according to the present modification. An encoder according to the present modification includes, for example, power generation element 100a instead of power generation element 100 of encoder 1 according to the first exemplary embodiment.

As illustrated in Fig. 5, power generation element 100a is different from power generation element 100 in that ferrite member 150a is provided instead of ferrite member 150.

Ferrite member 150a includes main body 151 disposed inside columnar space A and protrusion 152a connected to main body 151 and disposed outside columnar space A. Protrusion 152a is an example of a first protrusion located outside coil 130 in a direction orthogonal to the winding axis direction. Protrusion 152a is located on the side opposite to the side of magnet 10 of coil 130.

A part of protrusion 152a is located closer to the center of coil 130 than main body 151 in the winding axis direction of coil 130. Protrusion 152a covers a part of coil 130 from the side of coil 130 opposite to the side of magnet 10.

In Fig. 5, similarly to Fig. 3, an example of a magnetic flux line derived from magnetic member 110 in a case where magnetic member 110 is magnetized by an external magnetic field is indicated by broken lines. Since a part of protrusion 152a is located closer to a center side of coil 130 than main body 151, the magnetic flux exiting from protrusion 152a does not pass through coil 130 in a part covered by a part of protrusion 152a. Therefore, the magnetic flux in a direction opposite to the inside of magnetic member 110 passing through coil 130 can be further reduced. Therefore, electric power generated in coil 130 increases, and the generated power of power generation element 100a can be increased.

### [Second modification]

Next, a second modification of the first exemplary embodiment will be described. In the following description of the present modification, differences from the first exemplary embodiment and the first modification of the first exemplary embodiment will be mainly described, and description of common points will be omitted or simplified.

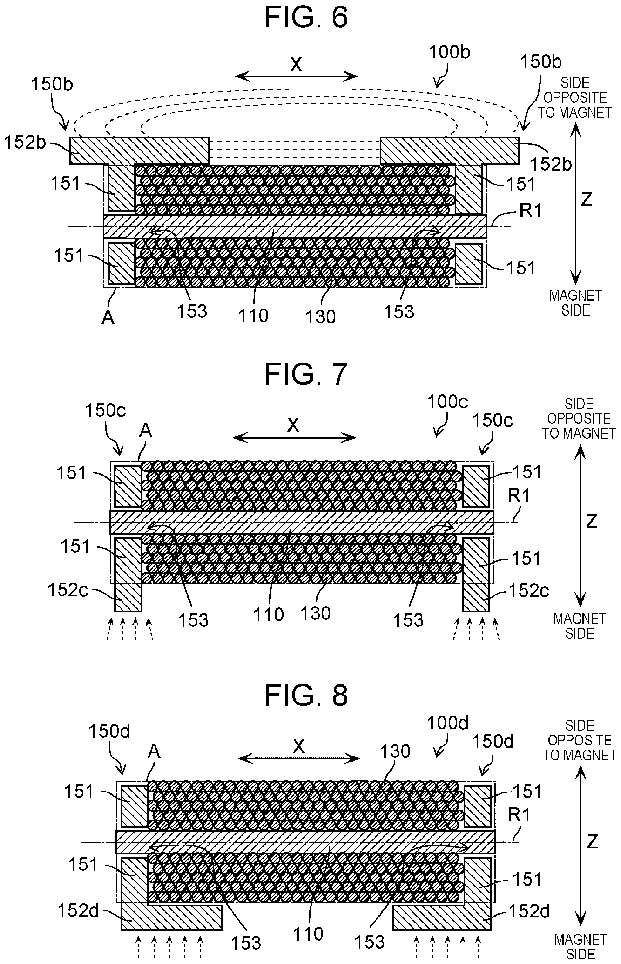

Fig. 6 is a cross-sectional view illustrating a schematic configuration of power generation element 100b according to the present modification. An encoder according to the present modification includes, for example, power generation element 100b instead of power generation element 100 of encoder 1 according to the first exemplary embodiment.

As illustrated in Fig. 6, power generation element 100b is different from power generation element 100 in that ferrite member 150b is provided instead of ferrite member 150.

Ferrite member 150b includes main body 151 disposed inside columnar space A and protrusion 152b connected to main body 151 and disposed outside columnar space A. Protrusion 152b is an example of a first protrusion located outside coil 130 in a direction orthogonal to the winding axis direction. Protrusion 152b is located on the side opposite to the side of magnet 10 of coil 130.

Similarly to protrusion 152a, a part of protrusion 152b is located closer to the center of coil 130 than main body 151 in the winding axis direction of coil 130. Protrusion 152b covers a part of coil 130 from the side of coil 130 opposite to the side of magnet 10. Furthermore, the other part of protrusion 152b is located on the side opposite to the side of coil 130 of main body 151 in the winding axis direction of coil 130. The other part of protrusion 152b is a part protruding outward from magnetic member 110 and coil 130 along the winding axis direction.

In Fig. 6, similarly to Fig. 3, an example of a magnetic flux line derived from magnetic member 110 in a case where magnetic member 110 is magnetized by an external magnetic field is indicated by broken lines. Since a part of protrusion 152b is located closer to the center side of coil 130 than main body 151, the same effect as that of protrusion 152a can be obtained. Furthermore, since the other part of protrusion 152b is located on the side opposite to the side of coil 130 of main body 151, the magnetic flux exiting from the other part of protrusion 152b passes through a position farther away from coil 130. Therefore, the magnetic flux in a direction opposite to the inside of magnetic member 110 passing through coil 130 can be further reduced. Therefore, electric power generated in coil 130 increases, and the generated power of power generation element 100b can be increased.

### [Third modification]

Next, a third modification of the first exemplary embodiment will be described. In the following description of the present modification, differences from the first exemplary embodiment and each modification of the first exemplary embodiment will be mainly described, and description of common points will be omitted or simplified.

Fig. 7 is a cross-sectional view illustrating a schematic configuration of power generation element 100c according to the present modification. An encoder according to the present modification includes, for example, power generation element 100c instead of power generation element 100 of encoder 1 according to the first exemplary embodiment.

As illustrated in Fig. 7, power generation element 100c is different from power generation element 100 in that ferrite member 150c is provided instead of ferrite member 150.

Ferrite member 150c includes main body 151 disposed inside columnar space A and protrusion 152c connected to main body 151 and disposed outside columnar space A. Protrusion 152c is an example of a first protrusion located outside coil 130 in a direction orthogonal to the winding axis direction. Protrusion 152c is located on the side of magnet 10 of coil 130.

Since protrusion 152c is disposed at a position closer to magnet 10 than main body 151, it is possible to collect more magnetic flux from magnet 10 and to further increase the magnetic flux density when magnetic member 110 is magnetized. Therefore, the change in the magnetic flux density in magnetic member 110 becomes larger, electric power generated in coil 130 increases, and the power generated by power generation element 100c can be increased.

Furthermore, since protrusion 152c protrudes so as to be away from coil 130 similarly to protrusion 152, the magnetic flux exiting from protrusion 152c hardly passes through coil 130. Therefore, an effect of increasing the generated power similar to that of power generation element 100 can also be expected.

### [Fourth modification]

Next, a fourth modification of the first exemplary embodiment will be described. In the following description of the present modification, differences from the first exemplary embodiment and each modification of the first exemplary embodiment will be mainly described, and description of common points will be omitted or simplified.

Fig. 8 is a cross-sectional view illustrating a schematic configuration of power generation element 100d according to the present modification. An encoder according to the present modification includes, for example, power generation element 100d instead of power generation element 100 of encoder 1 according to the first exemplary embodiment.

As illustrated in Fig. 8, power generation element 100d is different from power generation element 100 in that ferrite member 150d is provided instead of ferrite member 150.

Ferrite member 150d includes main body 151 disposed inside columnar space A and protrusion 152d connected to main body 151 and disposed outside columnar space A. Protrusion 152d is an example of a first protrusion located outside coil 130 in a direction orthogonal to the winding axis direction. Protrusion 152d is located on the side of magnet 10 of coil 130.

A part of protrusion 152d is located closer to the center of coil 130 than main body 151 in the winding axis direction of coil 130. Protrusion 152d covers a part of coil 130 from the side of magnet 10 in coil 130.

Similarly to protrusion 152c, protrusion 152d is disposed at a position closer to magnet 10 than main body 151, and thus collects more magnetic flux from magnet 10. Furthermore, since a part of protrusion 152d is located so as to extend toward the center side of coil 130, more magnetic flux can be collected. Therefore, the generated power of power generation element 100d can be increased.

Furthermore, since protrusion 152d has the same shape as protrusion 152a and is located outside coil 130, the magnetic flux exiting from protrusion 152d hardly passes through coil 130. Therefore, in power generation element 100d, an effect of increasing the generated power similar to that of power generation element 100a can also be expected.

### [Fifth modification]

Next, a fifth modification of the first exemplary embodiment will be described. In the following description of the present modification, differences from the first exemplary embodiment and each modification of the first exemplary embodiment will be mainly described, and description of common points will be omitted or simplified.

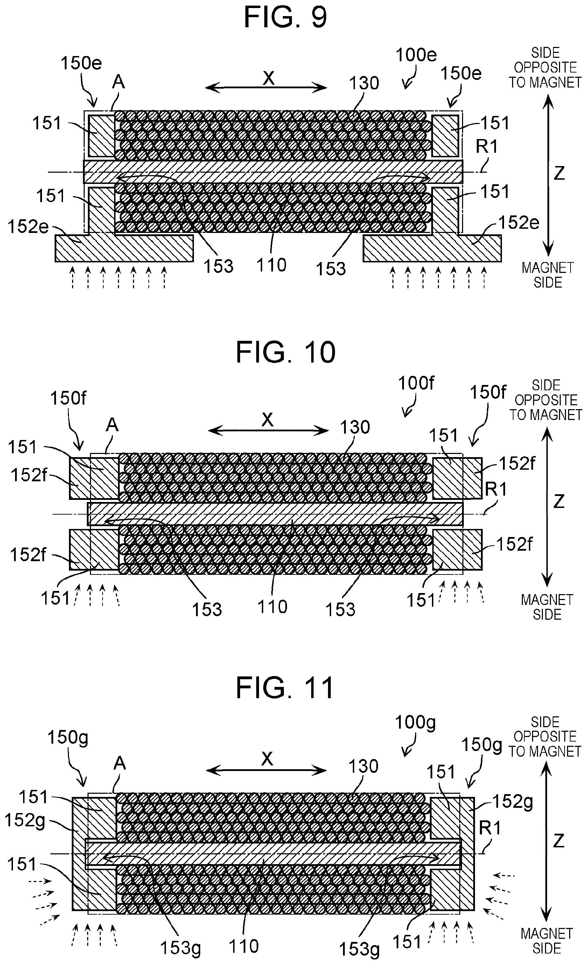

Fig. 9 is a cross-sectional view illustrating a schematic configuration of power generation element 100e according to the present modification. An encoder according to the present modification includes, for example, power generation element 100e instead of power generation element 100 of encoder 1 according to the first exemplary embodiment.

As illustrated in Fig. 9, power generation element 100e is different from power generation element 100 in that ferrite member 150e is provided instead of ferrite member 150.

Ferrite member 150e includes main body 151 disposed inside columnar space A and protrusion 152e connected to main body 151 and disposed outside columnar space A. Protrusion 152e is an example of a first protrusion located outside coil 130 in a direction orthogonal to the winding axis direction. Protrusion 152e is located on the side of magnet 10 of coil 130.

A part of protrusion 152e is located closer to the center side of coil 130 than main body 151 in the winding axis direction of coil 130. Protrusion 152e covers a part of coil 130 from the side of magnet 10 in coil 130. Furthermore, the other part of protrusion 152e is located on the side opposite to the side of coil 130 of main body 151 in the winding axis direction of coil 130. The other part of protrusion 152e is a part protruding outward from magnetic member 110 and coil 130 along the winding axis direction.

Similarly to protrusion 152c, protrusion 152e is disposed at a position closer to magnet 10 than main body 151, and thus collects more magnetic flux from magnet 10. Furthermore, since a part and the other part of protrusion 152e are positioned so as to extend along the winding axis direction, more magnetic flux can be collected. Therefore, the generated power of power generation element 100e can be increased.

Furthermore, since protrusion 152e has the same shape as protrusion 152b and is located outside coil 130, the magnetic flux exiting from protrusion 152e hardly passes through coil 130. Therefore, in power generation element 100e, an effect of increasing the generated power similar to that of power generation element 100b can also be expected.

### [Sixth modification]

Next, a sixth modification of the first exemplary embodiment will be described. In the following description of the present modification, differences from the first exemplary embodiment and each modification of the first exemplary embodiment will be mainly described, and description of common points will be omitted or simplified.

Fig. 10 is a cross-sectional view illustrating a schematic configuration of power generation element 100f according to the present modification. An encoder according to the present modification includes, for example, power generation element 100f instead of power generation element 100 of encoder 1 according to the first exemplary embodiment.

As illustrated in Fig. 10, power generation element 100f is different from power generation element 100 in that ferrite member 150f is provided instead of ferrite member 150.

Ferrite member 150f includes main body 151 disposed inside columnar space A and protrusion 152f connected to the main body 151 and disposed outside columnar space A. Protrusion 152f is an example of a second protrusion located outside the end of magnetic member 110 in the winding axis direction. Protrusion 152f is positioned so as to extend from main body 151 on the side opposite to the side of coil 130 of main body 151 along the winding axis direction.

Since protrusion 152f extends outward from the end of magnetic member 110, ferrite member 150f collects more magnetic flux from magnet 10, and the magnetic flux density when magnetic member 110 is magnetized can be further increased. Therefore, the generated power of power generation element 100f can be increased with the same effect as that of power generation element 100c.

Furthermore, since the magnetic flux derived from magnetic member 110 also exits from protrusion 152f, the magnetic flux exiting from main body 151 close to coil 130 is reduced, and the magnetic flux passing through coil 130 in the direction opposite to the inside of magnetic member 110 can be reduced. Therefore, electric power generated in coil 130 increases, and the generated power of power generation element 100f can be increased.

### [Seventh modification]

Next, a seventh modification of the first exemplary embodiment will be described. In the following description of the present modification, differences from the first exemplary embodiment and each modification of the first exemplary embodiment will be mainly described, and description of common points will be omitted or simplified.

Fig. 11 is a cross-sectional view illustrating a schematic configuration of power generation element 100g according to the present modification. An encoder according to the present modification includes, for example, power generation element 100g instead of power generation element 100 of encoder 1 according to the first exemplary embodiment.

As illustrated in Fig. 11, power generation element 100g is different from power generation element 100 in that ferrite member 150g is provided instead of ferrite member 150.

Ferrite member 150g includes main body 151 disposed inside columnar space A and protrusion 152g connected to main body 151 and disposed outside columnar space A. Opening 153g is formed in ferrite member 150g. Opening 153g is provided, for example, at a central part of main body 151 when viewed from the winding axis direction. Furthermore, opening 153g is a bottomed hole that penetrates main body 151 and has a bottom part formed by protrusion 152g. The end of magnetic member 110 is located in opening 153g.

Protrusion 152g is an example of a second protrusion located outside the end of magnetic member 110 in the winding axis direction. Protrusion 152g extends from main body 151 to the side opposite to the side of coil 130 of main body 151 along the winding axis direction. Protrusion 152g covers the end of magnetic member 110 from the outside in the winding axis direction.

Since protrusion 152g covers the end of magnetic member 110, ferrite member 150g collects more magnetic flux from magnet 10, and the magnetic flux density when magnetic member 110 is magnetized can be further increased. Therefore, the generated power of power generation element 100g can be increased with the same effect as that of power generation element 100c.

Furthermore, since the magnetic flux derived from magnetic member 110 also exits from protrusion 152g, the magnetic flux exiting from main body 151 close to coil 130 is reduced, and the magnetic flux passing through coil 130 in the direction opposite to the inside of magnetic member 110 can be reduced. Therefore, electric power generated in coil 130 increases, and the generated power of power generation element 100g can be increased.

### (Second exemplary embodiment)

Next, a second exemplary embodiment will be described. In the following description of the present exemplary embodiment, differences from the first exemplary embodiment will be mainly described, and description of common points will be omitted or simplified.

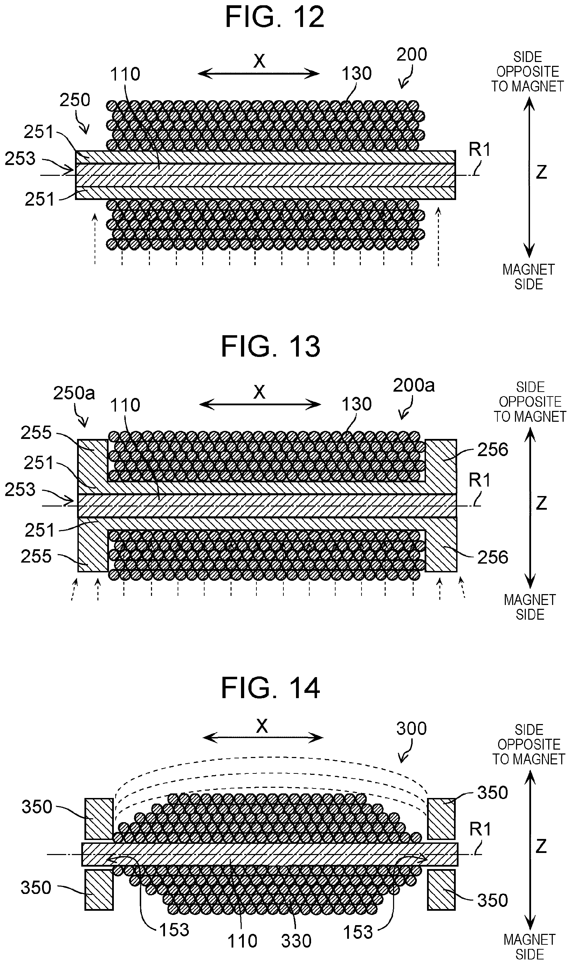

Fig. 12 is a cross-sectional view illustrating a schematic configuration of power generation element 200 according to the present exemplary embodiment. An encoder according to the present exemplary embodiment includes, for example, power generation element 200 instead of power generation element 100 of encoder 1 according to the first exemplary embodiment.

As illustrated in Fig. 12, power generation element 200 is different from power generation element 100 in that ferrite member 250 is provided instead of ferrite member 150.

Ferrite member 250 includes magnetic member 110. Specifically, in ferrite member 250, opening 253 is formed at the center of ferrite member 250 when viewed from the winding axis direction, and magnetic member 110 is located in opening 253. Ferrite member 250 is a member including tubular main body 251 through which opening 253 penetrates.

In the winding axis direction, a length of main body 251 is, for example, the same as a length of magnetic member 110. In the winding axis direction, the length of main body 251 may be longer or shorter than the length of magnetic member 110. Main body 251 covers, for example, the entire outer periphery of magnetic member 110 when viewed from the winding axis direction. Furthermore, in the winding axis direction, the length of main body 251 is longer than a length of coil 130, for example.

In power generation element 200, coil 130 is wound around ferrite member 250. In power generation element 200, coil 130, ferrite member 250, and magnetic member 110 are aligned in this order from the outside in the direction orthogonal to the winding axis direction.

In power generation element 200, since coil 130 is wound around ferrite member 250 covering the outer periphery of magnetic member 110 when viewed from the winding axis direction, a surface area of ferrite member 250 increases, and ferrite member 250 can collect more magnetic flux from magnet 10. Therefore, the magnetic flux density when magnetic member 110 is magnetized can be further increased, and the generated power of power generation element 200 can be increased.

### [First modification]

Next, a first modification of the second exemplary embodiment will be described. In the following description of the present modification, differences from the first exemplary embodiment and the second exemplary embodiment will be mainly described, and description of common points will be omitted or simplified.

Fig. 13 is a cross-sectional view illustrating a schematic configuration of power generation element 200a according to the present modification. An encoder according to the present modification includes, for example, power generation element 200a instead of power generation element 100 of encoder 1 according to the first exemplary embodiment.

As illustrated in Fig. 13, power generation element 200a is different from power generation element 200 in that ferrite member 250a is provided instead of ferrite member 250.

Ferrite member 250a includes tubular main body 251 enclosing magnetic member 110, and flange-shaped first flange 255 and flange-shaped second flange 256 provided at both ends of main body 251 in the winding axis direction. Coil 130 is located between first flange 255 and second flange 256.

First flange 255 is a plate body erected in a direction orthogonal to the winding axis direction from one end of main body 251. Second flange 256 is a plate body erected in a direction orthogonal to the winding axis direction from the other end of main body 251. First flange 255 and second flange 256 have, for example, the same shape.

As described above, since ferrite member 250a includes first flange 255 and second flange 256 in addition to main body 251, the surface area of ferrite member 250a is further increased, and ferrite member 250a can collect more magnetic flux from magnet 10. Therefore, the magnetic flux density when magnetic member 110 is magnetized can be further increased, and the generated power of power generation element 200a can be increased.

### (Third exemplary embodiment)

Next, a third exemplary embodiment will be described. In the following description of the present exemplary embodiment, differences from the first exemplary embodiment and the second exemplary embodiment will be mainly described, and description of common points will be omitted or simplified.

Fig. 14 is a cross-sectional view illustrating a schematic configuration of power generation element 300 according to the present exemplary embodiment. An encoder according to the present exemplary embodiment includes, for example, power generation element 300 instead of power generation element 100 of encoder 1 according to the first exemplary embodiment.

As illustrated in Fig. 14, power generation element 300 is different from power generation element 100 in that coil 330 is provided instead of coil 130 and ferrite member 350 is provided instead of ferrite member 150.

Coil 330 is a coil in which a conductive wire constituting coil 330 is wound around magnetic member 110. In the winding axis direction, an outer peripheral diameter of an end of coil 330 is smaller than an outer peripheral diameter of a central part of coil 330. In the present specification, the outer peripheral diameter is an outer peripheral diameter when viewed from the winding axis direction. Furthermore, the end and the central part of coil 330 mean the end and the central part of a winding part in which coil 330 is wound around magnetic member 110. In the present exemplary embodiment, the number of windings per unit length of the end of coil 330 is smaller than the number of windings per unit length of the central part of coil 330 in the winding axis direction. Note that coil 330 may not have the above-described relationship of the number of windings per unit length as long as the outer peripheral diameter of the end of coil 330 is smaller than the outer peripheral diameter of the central part of coil 330 in the winding axis direction. For example, by changing the shape of magnetic member 110, providing a spacer or the like between magnetic member 110 and the coil, or the like, the outer peripheral diameter of the end of coil 330 may be smaller than the outer peripheral diameter of the central part of coil 330 in the winding axis direction.

Ferrite member 350 is the same as ferrite member 150 except that it does not have protrusion 152. That is, ferrite member 350 is a member including main body 151 in ferrite member 150. Note that ferrite member 350 is not limited to such an example, and may be, for example, any one of the ferrite members according to the above-described first exemplary embodiment, each modification of the first exemplary embodiment, and the second exemplary embodiment.

In Fig. 14, similarly to Fig. 3, an example of a magnetic flux line derived from magnetic member 110 in a case where magnetic member 110 is magnetized by an external magnetic field is indicated by broken lines. As illustrated in Fig. 14, in the vicinity of both ends of magnetic member 110 in the winding axis direction, the magnetic flux formed outside magnetic member 110 from one end side to the other end side of magnetic member 110 easily passes through a position relatively close to magnetic member 110. Since the outer peripheral diameter of the end of coil 330 is smaller than the outer peripheral diameter of the central part of coil 330 in the winding axis direction, coil 330 exists so as to avoid the magnetic flux formed outside magnetic member 110 described above. Therefore, the magnetic flux in the direction opposite to the inside of magnetic member 110 passing through coil 330 can be reduced. Therefore, electric power generated in coil 330 increases, and the generated power of power generation element 300 can be increased.

### (Fourth exemplary embodiment)

Next, a fourth exemplary embodiment will be described. In the following description of the present exemplary embodiment, differences from the first exemplary embodiment to the third exemplary embodiment will be mainly described, and description of common points will be omitted or simplified.

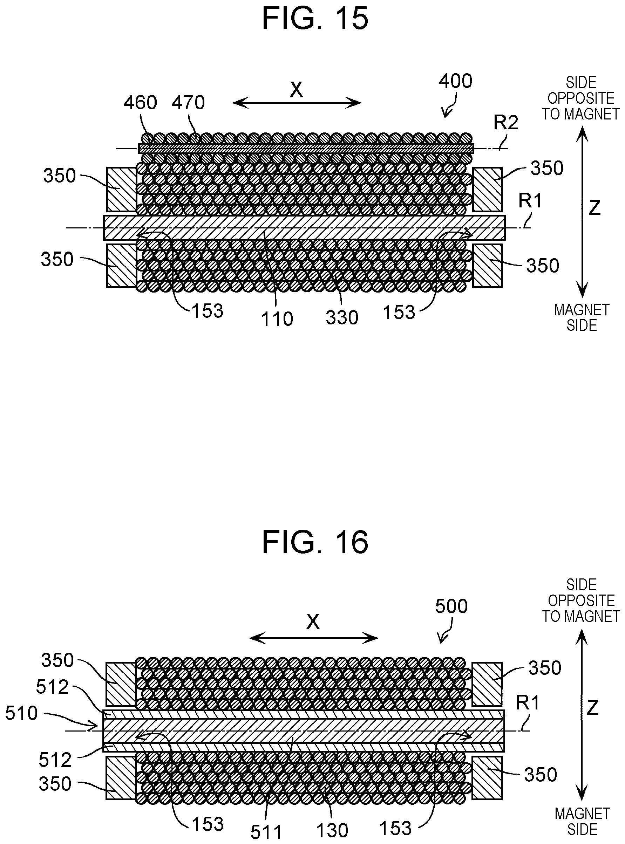

Fig. 15 is a cross-sectional view illustrating a schematic configuration of power generation element 400 according to the present exemplary embodiment. An encoder according to the present exemplary embodiment includes, for example, power generation element 400 instead of power generation element 100 of encoder 1 according to the first exemplary embodiment.

As illustrated in Fig. 15, power generation element 400 is different from power generation element 100 in that ferrite member 350 is provided instead of ferrite member 150, and magnetic member 460 and coil 470 are further provided. In the present exemplary embodiment, coil 130 is an example of a first coil, and coil 470 is an example of a second coil.

Unlike magnetic member 110, magnetic member 460 is a magnetic member that does not produce the large Barkhausen effect. Magnetic member 460 is not particularly limited as long as it is a ferromagnetic magnetic member used as a core material of a coil such as an iron core. Magnetic member 460 positively collects magnetic flux derived from magnetization of magnetic member 110 formed outside magnetic member 110 from one end to the other end in the winding axis direction of magnetic member 110.

Similarly to magnetic member 110, magnetic member 460 is an elongated member in which the winding axis direction of coil 130 is the longitudinal direction. Magnetic member 460 is disposed on the side opposite to the side of magnet 10 of magnetic member 110 and coil 130 so as to face magnetic member 110 and coil 130. Magnetic member 460 is placed on coil 130 in a state where coil 470 is wound, for example.

Coil 470 is a coil in which a conductive wire constituting coil 470 is wound around magnetic member 460. Specifically, coil 470 is wound along winding axis R2 passing through a center of magnetic member 460. Winding axis R2 is parallel to winding axis R1. Coil 470 is disposed on the side opposite to the side of magnet 10 of magnetic member 110 and coil 130 so as to face magnetic member 110 and coil 130. Coil 470 is placed on coil 130, for example. Magnetic member 110, coil 130, magnetic member 460, and coil 470 are aligned along an alignment direction indicated by arrow Z.

Magnetic member 460 and coil 470 are disposed at positions where a magnetic field is formed by magnetic member 110 magnetized by an external magnetic field of magnet 10 or the like. Specifically, magnetic member 460 and coil 470 are disposed at positions through which magnetic flux derived from magnetic member 110 formed outside magnetic member 110 passes from one end to the other end in the winding axis direction of magnetic member 110. Therefore, magnetic member 460 and coil 470 are disposed at positions through which magnetic flux in a direction opposite to the inside of magnetic member 110 passes. As a result, coil 470 generates power together with coil 130 by a change in the magnetic flux of magnetic member 110.

Coil 130 and coil 470 are electrically connected in series, for example. Specifically, the conductive wire constituting coil 130 and the conductive wire constituting coil 470 are electrically connected in series such that currents generated in coil 130 and coil 470 due to a change in the magnetic flux of magnetic member 110 do not cancel each other. For example, in a case where the winding directions of the conductive wires of coil 130 and coil 470 are opposite to each other, the current flows in the same direction, so that the conductive wire of coil 130 drawn from the end on one side in the winding axis direction and the conductive wire of coil 470 drawn from the end on the other side are connected in series. Furthermore, for example, in a case where the winding directions of the conducting wires of coil 130 and coil 470 are the same direction, the conducting wire of coil 130 drawn from the end on one side in the winding axis direction and the conducting wire of coil 470 drawn from the end on the same one side are connected to each other, so that the conducting wires are connected in series. The conductive wires drawn from the end on the side where the coils are not connected to each other in each of coil 130 and coil 470 are connected to terminal 181 and terminal 182. Note that coil 130 and coil 470 may be electrically connected in parallel.

With such a configuration, in power generation element 400, coil 470 also generates power simultaneously with coil 130 by the magnetic flux generated from magnetic member 110 when magnetic member 110 is magnetized, so that the generated power of power generation element 400 can be increased. On the other hand, it is conceivable to simply increase the number of windings of coil 130 to increase a power generation amount of coil 130, but when coil 130 becomes thick, the conducting wire of coil 130 also exists at a position through which the magnetic flux in the direction opposite to the inside of magnetic member 110 on the outer side of magnetic member 110 passes. Therefore, when a magnetic flux in a direction opposite to the inside of magnetic member 110 passes through a part of coil 130, an electromotive force in a direction opposite to an electromotive force due to a change in the magnetic flux in magnetic member 110 is simultaneously generated, and an amount of power generation cannot be effectively increased. Therefore, as in power generation element 400, since coil 470 generates power together with coil 130, the generated power can be effectively increased without canceling the electromotive force of coil 130.

### (Fifth exemplary embodiment)

Next, a fifth exemplary embodiment will be described. In the following description of the present exemplary embodiment, differences from the first exemplary embodiment to the fourth exemplary embodiment will be mainly described, and description of common points will be omitted or simplified.

Fig. 16 is a cross-sectional view illustrating a schematic configuration of power generation element 500 according to the present exemplary embodiment. An encoder according to the present exemplary embodiment includes, for example, power generation element 500 instead of power generation element 100 of encoder 1 according to the first exemplary embodiment.

As illustrated in Fig. 16, power generation element 500 is different from power generation element 100 in that magnetic member 510 is provided instead of magnetic member 110 and ferrite member 350 is provided instead of ferrite member 150.

Magnetic member 510 includes composite magnetic wire 511 having different magnetic characteristics between a central part and an outer peripheral part, and covering layer 512 covering an outer periphery of composite magnetic wire 511. Magnetic member 510 is a magnetic member that produces the large Barkhausen effect by a change in an external magnetic field. Composite magnetic wire 511 is, for example, a Wiegand wire, and is as described as a composite magnetic wire that can be used for magnetic member 110 described above. In the composite magnetic wire, one of the central part and the outer peripheral part in a radial direction is a hard magnetic part, and the other is a soft magnetic part.

Covering layer 512 covers, for example, the entire surface of composite magnetic wire 511 in the radial direction. Covering layer 512 is made of a soft magnetic material. A coercive force of covering layer 512 is, for example, equal to a coercive force of the soft magnetic part in composite magnetic wire 511. Examples of a material constituting covering layer 512 include Fe-Ni, Fe-Si, Fe-Si-Al, Fe-Si-B, and Co-Fe-Si-B.

Covering layer 512 is formed by using, for example, a physical vapor deposition (PVD) method such as a sputtering method, an ion plating method, and a vacuum vapor deposition method, a chemical vapor deposition (CVD) method, a plating method, or the like.

As described above, the large Barkhausen jump occurs when the magnetization direction of the soft magnetic part of composite magnetic wire 511 is rapidly reversed. Therefore, as the magnetic flux of the soft magnetic part is larger, the change in the magnetic flux density in the large Barkhausen jump is larger, and the power generation of coil 130 accompanying the large Barkhausen jump is also larger. Therefore, in magnetic member 510, since the magnetization of covering layer 512 is rapidly inverted together with the soft magnetic part of composite magnetic wire 511, electric power generated in coil 130 increases, and the power generated by power generation element 500 can be increased.

### (Sixth exemplary embodiment)

Next, a sixth exemplary embodiment will be described. In the following description of the present exemplary embodiment, differences from the first exemplary embodiment to the fifth exemplary embodiment will be mainly described, and description of common points will be omitted or simplified.

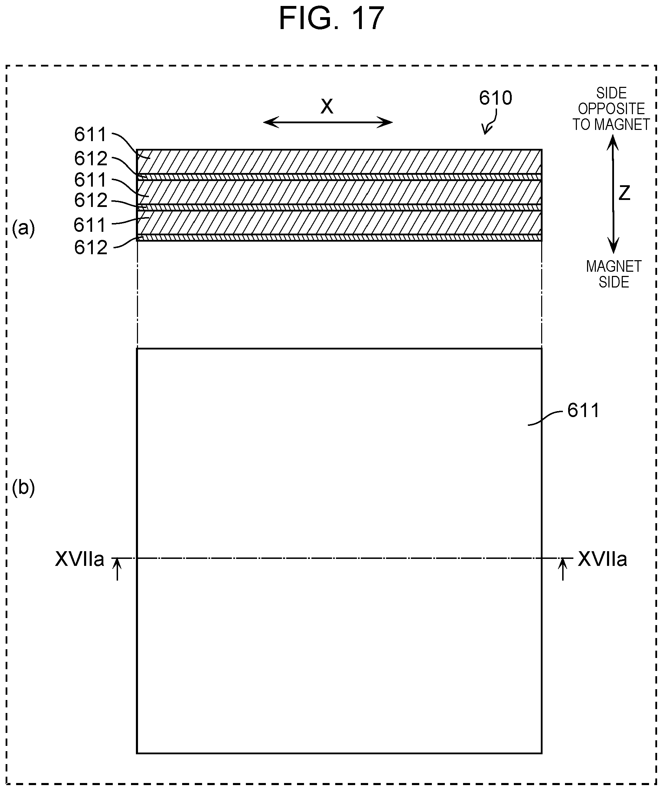

Fig. 17 is a cross-sectional view and a top view illustrating a schematic configuration of magnetic member 610 according to the present exemplary embodiment. Specifically, part (a) of Fig. 17 is a cross-sectional view of magnetic member 610, and part (b) of Fig. 17 is a top view of magnetic member 610 as viewed from above in part (a) of Fig. 17. Part (a) of Fig. 17 illustrates a cross section at a position indicated by line XVIIa-XVIIa in part (b) of Fig. 17. An encoder according to the present exemplary embodiment includes, for example, a power generation element using magnetic member 610 instead of power generation element 100 of encoder 1 according to the first exemplary embodiment. The power generation element according to the present exemplary embodiment includes, for example, magnetic member 610 instead of the magnetic member 510 according to the fifth exemplary embodiment. Note that magnetic member 610 according to the present exemplary embodiment may be used instead of the magnetic member according to any one of the first exemplary embodiment to the fourth exemplary embodiment.

As illustrated in Fig. 17, magnetic member 610 includes a plurality of first magnetic sensitive layers 611 and a plurality of second magnetic sensitive layers 612 having harder magnetism than the plurality of first magnetic sensitive layers 611. Magnetic member 610 is a magnetic member that produces the large Barkhausen effect by a change in an external magnetic field.

In the plurality of first magnetic sensitive layers 611 and the plurality of second magnetic sensitive layers 612, first magnetic sensitive layers 611 and second magnetic sensitive layers 612 are alternately stacked along a direction intersecting (specifically, orthogonal to) the winding axis direction indicated by arrow X. In the illustrated example, the plurality of first magnetic sensitive layers 611 and the plurality of second magnetic sensitive layers 612 are stacked along the alignment direction indicated by arrow Z.

A total thickness of the plurality of first magnetic sensitive layers 611 is larger than a total thickness of the plurality of second magnetic sensitive layers 612.

Furthermore, a thickness of each of first magnetic sensitive layers 611 may be larger than a thickness of each of second magnetic sensitive layers 612. Furthermore, the thicknesses of the plurality of first magnetic sensitive layers 611 is, for example, the same, but may be different from each other. Similarly, the thicknesses of the plurality of second magnetic sensitive layers 612 are, for example, the same, but may be different from each other.

Furthermore, in the illustrated example, the number of each of the plurality of first magnetic sensitive layers 611 and the plurality of second magnetic sensitive layers 612 is three, but may be two or four or more. Furthermore, the number of the plurality of first magnetic sensitive layers 611 and the number of the plurality of second magnetic sensitive layers 612 may be different. For example, both an uppermost part and a lowermost part of magnetic member 610 may be first magnetic sensitive layers 611.

A shape of magnetic member 610 when viewed from a stacking direction is, for example, a rectangular shape having substantially the same vertical and horizontal lengths, but may be another shape such as a circular shape or a polygonal shape.

The plurality of first magnetic sensitive layers 611 and the plurality of second magnetic sensitive layers 612 are stacked by being formed using, for example, a PVD method such as a sputtering method, an ion plating method, and a vacuum vapor deposition method, a CVD method, a plating method, or the like.

Examples of a material constituting the plurality of first magnetic sensitive layers 611 include Fe-Ni, Fe-Si, Fe-Si-Al, Fe-Si-B, and Co-Fe-Si-B.

A material constituting the plurality of second magnetic sensitive layers 612 is, for example, the same material as the material constituting the plurality of first magnetic sensitive layers 611. For example, by forming films under different film forming conditions at the time of forming the plurality of first magnetic sensitive layers 611 and at the time of forming the plurality of second magnetic sensitive layers 612, the coercive force is changed to form the plurality of second magnetic sensitive layers 612 having a higher coercive force and harder magnetism than the plurality of first magnetic sensitive layers 611. For example, in the case of forming the plurality of first magnetic sensitive layers 611 and the plurality of second magnetic sensitive layers 612 by the sputtering method, the coercive force is changed by changing the degree of vacuum, a temperature, a film forming speed, and the like as the film forming conditions. In a case where the degree of vacuum is changed as a film forming condition, for example, in a range of a specific degree of vacuum, in a case where the plurality of second magnetic sensitive layers 612 is formed, the coercive force of the plurality of second magnetic sensitive layers 612 can be increased by setting a condition that the degree of vacuum is higher than that at the time of forming the plurality of first magnetic sensitive layers 611.

Furthermore, the material constituting the plurality of second magnetic sensitive layers 612 may be a material different from the material constituting the plurality of first magnetic sensitive layers 611. Examples of the material constituting the plurality of second magnetic sensitive layers 612 in this case include Fe and Fe-Co. Furthermore, as the material constituting the plurality of second magnetic sensitive layers 612, an alloy of a metal having the same combination as the material constituting the plurality of first magnetic sensitive layers 611 and having a composition different from the material constituting the plurality of first magnetic sensitive layers 611 may be used.

In magnetic member 610 having the above configuration, since the plurality of first magnetic sensitive layers 611 is softer magnetic than the plurality of second magnetic sensitive layers 612, the magnetization directions of the plurality of first magnetic sensitive layers 611 are rapidly reversed by the change in the external magnetic field as described in the large Barkhausen effect, so that a power generation pulse is generated in coil 130 wound around magnetic member 610. In magnetic member 610, since the total thickness of the plurality of first magnetic sensitive layers 611 that is soft magnetic is larger than that of the plurality of second magnetic sensitive layers 612, electric power generated in coil 130 increases, and the power generated by the power generation element using magnetic member 610 can be increased. Furthermore, since first magnetic sensitive layers 611 and second magnetic sensitive layers 612 are alternately stacked, first magnetic sensitive layers 611 and second magnetic sensitive layers 612 easily interact with each other, and the large Barkhausen effect easily occurs, so that the generated power can be more effectively increased than simply thickening second magnetic sensitive layers 612.

Furthermore, the power generation element may be provided with a plurality of magnetic members 610. The plurality of magnetic members 610 is used by being stacked, for example.

### [First modification]

Next, a first modification of the sixth exemplary embodiment will be described. In the following description of the present modification, differences from the first exemplary embodiment to the sixth exemplary embodiment will be mainly described, and description of common points will be omitted or simplified.

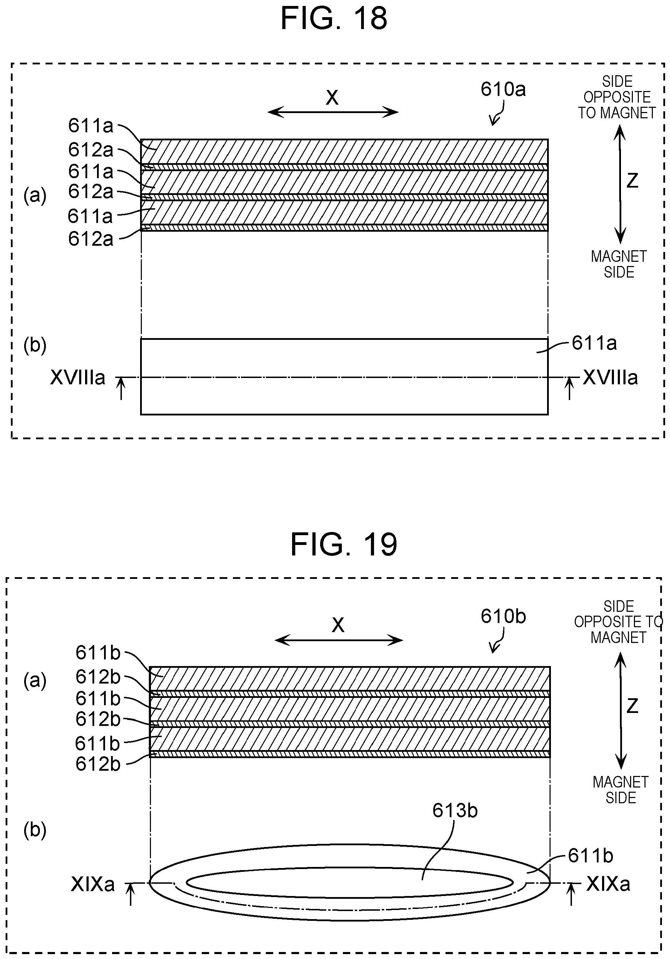

Fig. 18 is a cross-sectional view and a top view illustrating a schematic configuration of magnetic member 610a according to the present exemplary embodiment. Specifically, part (a) of Fig. 18 is a cross-sectional view of magnetic member 610a, and part (b) of Fig. 18 is a top view of magnetic member 610a as viewed from above in part (a) of Fig. 18. Part (a) of Fig. 18 illustrates a cross section at a position indicated by line XVIIIa-XVIIIa in part (b) of Fig. 18. Magnetic member 610a according to the present modification is used, for example, instead of magnetic member 610 according to the sixth exemplary embodiment.

As illustrated in Fig. 18, magnetic member 610a includes a plurality of first magnetic sensitive layers 611a and a plurality of second magnetic sensitive layers 612a having harder magnetism than the plurality of first magnetic sensitive layers 611a. Magnetic member 610a is a magnetic member that produces the large Barkhausen effect by a change in an external magnetic field. Magnetic member 610a has the same configuration as magnetic member 610 except that a shape as viewed from a stacking direction is different.

The shape of magnetic member 610a when viewed from the stacking direction is an elongated rectangle. A longitudinal direction of magnetic member 610a is the same direction as the winding axis direction. Furthermore, the longitudinal direction of magnetic member 610a is, for example, a direction orthogonal to the alignment direction. When viewed from the stacking direction, a length of magnetic member 610a in the longitudinal direction is, for example, twice or more a length of magnetic member 610a in a short direction.

As described above, since the shape of magnetic member 610a when viewed from the stacking direction is elongated, it is possible to magnetize the magnetic member in the longitudinal direction, and thus, it is possible to increase the change in the magnetic flux density due to reversal of the magnetization direction when the large Barkhausen jump occurs. Therefore, electric power generated in coil 130 increases, and the generated power of the power generation element using magnetic member 610a can be increased.

### [Second modification]

Next, a second modification of the sixth exemplary embodiment will be described. In the following description of the present modification, differences from the first exemplary embodiment to the sixth exemplary embodiment will be mainly described, and description of common points will be omitted or simplified.

Fig. 19 is a cross-sectional view and a top view illustrating a schematic configuration of magnetic member 610b according to the present exemplary embodiment. Specifically, part (a) of Fig. 19 is a cross-sectional view of magnetic member 610b, and part (b) of Fig. 19 is a top view of magnetic member 610b as viewed from above in part (a) of Fig. 19. Part (a) of Fig. 19 illustrates a cross section at a position indicated by line XIXa-XIXa in part (b) of Fig. 19. Magnetic member 610b according to the present modification is used, for example, instead of magnetic member 610 according to the sixth exemplary embodiment.

As illustrated in Fig. 19, magnetic member 610b includes a plurality of first magnetic sensitive layers 611b and a plurality of second magnetic sensitive layers 612b having harder magnetism than the plurality of first magnetic sensitive layers 611b. Magnetic member 610b is a magnetic member that produces the large Barkhausen effect by a change in an external magnetic field. Magnetic member 610b has the same configuration as magnetic member 610 except that a shape as viewed from a stacking direction is different.

Magnetic member 610b has an elliptical outer shape when viewed from the stacking direction. A major axis of the ellipse of magnetic member 610b extends in the winding axis direction. Furthermore, the major axis of the ellipse of magnetic member 610b extends, for example, in a direction orthogonal to the alignment direction.

Furthermore, magnetic member 610b is formed with opening 613b penetrating a central part of the magnetic member 610b in the stacking direction when viewed from the stacking direction. A shape of opening 613b when viewed from the stacking direction is elliptical, but may be another shape such as a rectangle. A major axis of the ellipse of opening 613b extends in the winding axis direction. When viewed from the stacking direction, opening 613b has a shape similar to an outer periphery of magnetic member 610b, for example.

As described above, since magnetic member 610b has an elliptical shape when viewed from the stacking direction, a width of the central part is larger than a width of both end parts in the winding axis direction. Usually, in a case where magnetic member 610b is magnetized by an external magnetic field, the central part is likely to be magnetized because a stronger magnetic field is applied, and both ends may be hardly magnetized. In particular, when the magnetization of second magnetic sensitive layer 612b that is hard magnetic is insufficient, the magnetization direction of first magnetic sensitive layer 611b cannot be maintained until the large Barkhausen jump occurs, and the large Barkhausen jump occurs mainly in the central part of magnetic member 610b. Therefore, by increasing the width of the central part of magnetic member 610b to which a strong magnetic field is likely to be applied, a volume of the part where the large Barkhausen jump occurs in magnetic member 610b increases. Therefore, electric power generated in coil 130 increases, and the generated power of the power generation element using magnetic member 610b can be increased.

### (Seventh exemplary embodiment)

Next, a seventh exemplary embodiment will be described. In the following description of the present exemplary embodiment, differences from the first exemplary embodiment to the sixth exemplary embodiment will be mainly described, and description of common points will be omitted or simplified.

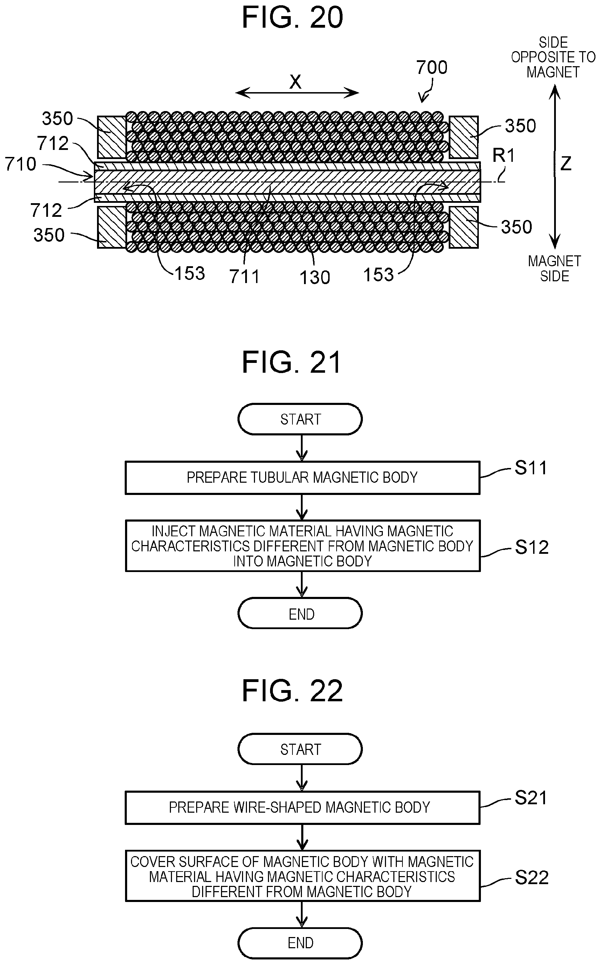

Fig. 20 is a cross-sectional view illustrating a schematic configuration of power generation element 700 according to the present exemplary embodiment. An encoder according to the present exemplary embodiment includes, for example, power generation element 700 instead of power generation element 100 of encoder 1 according to the first exemplary embodiment.

As illustrated in Fig. 20, power generation element 700 is different from power generation element 500 according to the fifth exemplary embodiment in that magnetic member 710 is provided instead of the magnetic member 510.

Magnetic member 710 includes first magnetic sensing part 711 and second magnetic sensing part 712 having magnetic characteristics different from those of first magnetic sensing part 711. Magnetic member 710 is a magnetic member that produces the large Barkhausen effect by a change in an external magnetic field. A cross-sectional shape of magnetic member 710 cut in a radial direction is, for example, a circular shape or an elliptical shape, but may be another shape such as a rectangular shape or a polygonal shape. Magnetic member 710 is, for example, an elongated member in which the winding axis direction of coil 130 is the longitudinal direction.

First magnetic sensing part 711 and second magnetic sensing part 712 each extend in the winding axis direction. First magnetic sensing part 711 and second magnetic sensing part 712 both have an elongated shape extending in the winding axis direction. Specifically, first magnetic sensing part 711 has a wire shape extending in the winding axis direction, and second magnetic sensing part 712 has a tubular shape extending in the winding axis direction. Second magnetic sensing part 712 covers a surface to be an outer periphery of first magnetic sensing part 711 when viewed from the winding axis direction, in other words, a surface extending along the winding axis direction. First magnetic sensing part 711 and second magnetic sensing part 712 are aligned in a direction intersecting (for example, orthogonal to) the winding axis direction.

In the present exemplary embodiment, one of first magnetic sensing part 711 and second magnetic sensing part 712 is a hard magnetic part having a higher coercive force than the other, and the other is a soft magnetic part. In magnetic member 710, first magnetic sensing part 711 may be a hard magnetic part, and second magnetic sensing part 712 may be a hard magnetic part. First magnetic sensing part 711 and second magnetic sensing part 712 are made of different materials, for example. Examples of a material constituting the hard magnetic part include a magnetic material having a coercive force of 60 Oe or more. Furthermore, examples of a material constituting the soft magnetic part include a magnetic material having a coercive force of 20 Oe or less.

Magnetic member 710 used in power generation element 700 is a magnetic member manufactured by any one of the following examples of a manufacturing method.

### [First example of manufacturing method]

First, a first example of a method of manufacturing magnetic member 710 will be described. Fig. 21 is a flowchart of the first example of the method of manufacturing magnetic member 710.

As illustrated in Fig. 21, in the first example of the manufacturing method, first, a tubular magnetic body is prepared (step S11). The tubular magnetic body is a member that becomes above-described second magnetic sensing part 712, and is an elongated tubular body having an opening penetrating in the longitudinal direction.

Next, a magnetic material having magnetic characteristics different from those of the magnetic body is injected into the tubular magnetic body (step S12). As a result, above-described first magnetic sensing part 711 is formed. The magnetic material includes, for example, a magnetic powder and a resin. Magnetic member 710 is formed by insert molding such that such a magnetic material is injected into the tubular magnetic body (into the opening). Furthermore, magnetic member 710 may be formed by injecting the magnetic material composed of a magnetic powder into the tubular magnetic body and sintering the magnetic powder.

By forming magnetic member 710 by such a manufacturing method, magnetic member 710 can be manufactured by a simplified process without undergoing a process such as twisting the magnetic member under a predetermined condition.

Furthermore, the size of the soft magnetic part, which is one of first magnetic sensing part 711 and second magnetic sensing part 712, can be easily adjusted, and by forming the soft magnetic part (for example, the soft magnetic part having a larger cross-sectional area in the radial cross section than the hard magnetic part) having an appropriate size, electric power generated in coil 130 can be increased, and the power generated by power generation element 700 can be increased.

Furthermore, in a case where the hard magnetic part and the soft magnetic part are formed by twisting the magnetic member, there is a possibility that magnetic characteristics become non-uniform in the hard magnetic part and the soft magnetic part. In magnetic member 710, the magnetic characteristics of first magnetic sensing part 711 and second magnetic sensing part 712 can be determined depending on the material to be used. Therefore, the uniformity of the magnetic characteristics inside each of first magnetic sensing part 711 and second magnetic sensing part 712 is high, and an amount of change in the magnetic flux density of magnetic member 710 in the large Barkhausen jump is stabilized. Therefore, the variation in the generated power of power generation element 700 can be reduced.

### [Second example of manufacturing method]

Next, a second example of a method of manufacturing magnetic member 710 will be described. Fig. 22 is a flowchart of the second example of the method of manufacturing magnetic member 710.

As illustrated in Fig. 22, in the second example of the manufacturing method, first, a wire-shaped magnetic body is prepared (step S21). The wire-shaped magnetic body is an elongated wire to be first magnetic sensing part 711 described above.

Next, a surface to be a radially outer surface of the wire-shaped magnetic body is covered with a magnetic material having magnetic characteristics different from those of the magnetic body (step S22). As a result, above-described second magnetic sensing part 712 is formed. Examples of a method of covering the surface of the magnetic body with the magnetic material include a physical vapor deposition (PVD) method such as a sputtering method, an ion plating method, and a vacuum vapor deposition method, a chemical vapor deposition (CVD) method, a plating method, and the like.

By forming magnetic member 710 by such a manufacturing method, magnetic member 710 can be manufactured by a simplified process without undergoing a process such as twisting the magnetic member under a predetermined condition.

Furthermore, as in the case of the first example of the manufacturing method, the size of the soft magnetic part, which is one of first magnetic sensing part 711 and second magnetic sensing part 712, can be easily adjusted, and by forming the soft magnetic part having an appropriate size, electric power generated in coil 130 can be increased, and the power generated by power generation element 700 can be increased. Moreover, the magnetic characteristics of first magnetic sensing part 711 and second magnetic sensing part 712 can be determined depending on the material to be used. Therefore, the uniformity of the magnetic characteristics inside each of first magnetic sensing part 711 and second magnetic sensing part 712 is high, and an amount of change in the magnetic flux density of magnetic member 710 in the large Barkhausen jump is stabilized. Therefore, the variation in the generated power of power generation element 700 can be reduced.

### (Other exemplary embodiments)

Although the power generation element and the encoder according to the present disclosure have been described above based on the exemplary embodiments, the present disclosure is not limited to the above exemplary embodiments. The present disclosure also includes a mode obtained by applying various modifications conceived by those skilled in the art to each of the above exemplary embodiments, and a mode realized by arbitrarily combining components and functions in different exemplary embodiments without departing from the gist of the present disclosure.

For example, in the above exemplary embodiment, the rotary encoder used in combination with the motor has been described as an example, but the present disclosure is not limited thereto. The technique of the present disclosure can also be applied to a linear encoder.

### INDUSTRIAL APPLICABILITY

The power generation element, the encoder, and the like according to the present disclosure are useful for equipment, devices, and the like that rotate or move linearly, such as motors.

### REFERENCE MARKS IN THE DRAWINGS

1: encoder
10: magnet
20: rotating plate
30: rotating shaft
40: board
50: control circuit
60: memory
100, 100a, 100b, 100c, 100d, 100e, 100f, 100g, 200, 200a, 300, 400, 500, 700: power generation element
110, 460, 510, 610, 610a, 610b, 710: magnetic member
130, 330, 470: coil
150, 150a, 150b, 150c, 150d, 150e, 150f, 150g, 250, 250a, 350: ferrite member
151, 251: main body
152, 152a, 152b, 152c, 152d, 152e, 152f, 152g: protrusion
153, 153g, 253, 613b: opening
181, 182: terminal
190: housing
255: first flange
256: second flange
511: composite magnetic wire
512: covering layer
611, 611a, 611b: first magnetic sensitive layer
612, 612a, 612b: second magnetic sensitive layer
711: first magnetic sensing part
712: second magnetic sensing part
A: columnar space
R1, R2: winding axis

## Claims

1. A power generation element comprising:
a magnetic member that produces a large Barkhausen effect by a change in an external magnetic field formed by a magnetic field generation source;
a coil wound around the magnetic member; and
a ferrite member provided at an end of the magnetic member, the ferrite member being aligned with the coil,
wherein
the ferrite member includes a main body and a protrusion protruding from the main body,
the main body is located inside a columnar space, the columnar space being surrounded by a virtual plane when it is assumed that an outer edge of the coil when viewed from a winding axis direction of the coil is extended to both sides in the winding axis direction of the coil, and the columnar space being sandwiched between two virtual planes that are in contact with both ends of the magnetic member in the winding axis direction of the coil and are orthogonal to the winding axis direction of the coil, and
the protrusion is connected to the main body and located outside the columnar space.

2. The power generation element according to Claim 1, wherein the protrusion includes a first protrusion located outside the coil in a direction orthogonal to the winding axis direction of the coil.

3. The power generation element according to Claim 2, wherein
the first protrusion includes a part located closer to a center side of the coil than the main body in the winding axis direction of the coil.

4. The power generation element according to Claim 2 or 3, wherein the first protrusion is located on a side opposite to a side of the magnetic field generation source of the coil.

5. The power generation element according to Claim 2 or 3, wherein the first protrusion is located on a side of the magnetic field generation source of the coil.

6. The power generation element according to any one of Claims 1 to 5, wherein the protrusion includes a second protrusion extending from the main body to an opposite side of the coil along the winding axis direction of the coil.

7. A power generation element comprising:
a magnetic member that produces a large Barkhausen effect by a change in an external magnetic field formed by a magnetic field generation source;
a ferrite member enclosing the magnetic member, the ferrite member having a tubular shape; and
a coil wound around the ferrite member.

8. The power generation element according to Claim 7, wherein
the ferrite member includes a main body that encloses the magnetic member, the main body having a tubular shape, and a first flange and a second flange provided at both ends of the main body in a winding axis direction of the coil, the first flange and the second flange having a flange shape, and
the coil is located between the first flange and the second flange.

9. The power generation element according to any one of Claims 1 to 8, wherein the ferrite member is a resin molded body containing at least one of a soft magnetic powder and a hard magnetic powder, and a resin.

10. A power generation element comprising:
a magnetic member that produces a large Barkhausen effect by a change in an external magnetic field formed by a magnetic field generation source;
a coil wound around the magnetic member; and
a ferrite member provided at an end of the magnetic member, the ferrite member being aligned with the coil along a winding axis direction of the coil,
wherein the ferrite member is a resin molded body containing at least one of a soft magnetic powder and a hard magnetic powder, and a resin.

11. The power generation element according to any one of Claims 1 to 10, wherein the ferrite member has a saturation magnetic flux density larger than a saturation magnetic flux density of the magnetic member.

12. The power generation element according to any one of Claims 1 to 11, wherein the ferrite member has a maximum residual magnetic flux density larger than a maximum residual magnetic flux density of the magnetic member.

13. A power generation element comprising:
a magnetic member that produces a large Barkhausen effect by a change in an external magnetic field formed by a magnetic field generation source; and
a coil wound around the magnetic member,
wherein the coil includes an end that has an outer peripheral diameter smaller than an outer peripheral diameter of a central part of the coil in a winding axis direction of the coil.

14. The power generation element according to Claim 13, wherein the end of the coil has a number of windings per unit length smaller than a number of windings per unit length of the central part of the coil in the winding axis direction of the coil.

15. A power generation element comprising:
a magnetic member that produces a large Barkhausen effect by a change in an external magnetic field formed by a magnetic field generation source;
a first coil wound around the magnetic member; and
a second coil disposed on a side opposite to a side of the magnetic field generation source of the first coil, the second coil facing the first coil and wound along an axis parallel to a winding axis of the first coil.

16. A power generation element comprising:
a magnetic member that generates a large Barkhausen effect by a change in an external magnetic field formed by a magnetic field generation source, the magnetic member having a plate shape; and
a coil wound around the magnetic member,
wherein
the magnetic member includes a plurality of first magnetic sensitive layers and a plurality of second magnetic sensitive layers having harder magnetism than the plurality of first magnetic sensitive layers,
the plurality of first magnetic sensitive layers and the plurality of second magnetic sensitive layers are alternately stacked along a direction intersecting a winding axis direction of the coil, and
the plurality of first magnetic sensitive layers has a total thickness larger than a total thickness of the plurality of second magnetic sensitive layers.

17. The power generation element according to Claim 16, wherein the magnetic member has an elongated shape when viewed from a stacking direction.

18. The power generation element according to Claim 16, wherein the magnetic member has an elliptical shape when viewed from a stacking direction.

19. A power generation element comprising:
a magnetic member that produces a large Barkhausen effect by a change in an external magnetic field formed by a magnetic field generation source; and
a coil wound around the magnetic member,
wherein the magnetic member includes a composite magnetic wire having different magnetic characteristics between a central part and an outer peripheral part, and a covering layer covering an outer periphery of the composite magnetic wire and configured of a soft magnetic material.

20. An encoder comprising:
a magnet that rotates together with a rotating shaft; and
the power generation element according to any one of claims 1 to 19 that generates an electric signal by a change in a magnetic field formed by the magnet due to rotation of the magnet.

21. A method of manufacturing a magnetic member that is used in a power generation element and produces a large Barkhausen effect, the method comprising:
preparing a magnetic body having a tubular shape; and
injecting, into the magnetic body, a magnetic material having magnetic characteristics different from those of the magnetic body.

22. A method of manufacturing a magnetic member that is used in a power generation element and produces a large Barkhausen effect, the method comprising:
preparing a magnetic body having a wire shape; and
covering a surface of the magnetic body with a magnetic material having magnetic characteristics different from those of the magnetic body.
